# EUROPÄISCHE PATENTSCHRIFT

(11) **EP 1 362 956 B1**
(45) Veröffentlichungstag und Bekanntmachung des Hinweises auf die Patenterteilung: **18.11.2009**
(21) Anmeldenummer: 03101273.5
(22) Anmeldetag: 08.05.2003
(51) Int. Cl.: E02F 3/36

(54) **Vorrichtung zum Verriegeln eines Werkzeugs an einem Hubwerk**
Device for latching a tool to a lifting gear
Dispositif pour verrouiller un outil sur un bras élévateur

(30) Priorität: 17.05.2002 DE 10221942
(43) Veröffentlichungstag der Anmeldung: 19.11.2003
(73) Patentinhaber: DEERE & COMPANY, Moline, Illinois 61265-8098 (US)
(72) Erfinder: Perrin, Laurent, 70700 Bucey les Gy (FR); Berthod, Emmanuel, 70100 Arc-les-Gray (FR); Portet, Sebastien, 70100 Chargey les Gray (FR); Ostermann, Philippe, 70100 Gray (FR)
(74) Vertreter: Holst, Sönke

(56) Entgegenhaltungen:
- EP-A- 0 943 738
- DE-A- 3 607 257
- FR-A- 2 703 113
- FR-A- 2 830 551
- US-A- 5 179 794
- US-A- 5 263 810
- US-A- 5 466 113
- US-A- 5 890 871
- US-A- 6 154 989

## Beschreibung

Die Erfindung betrifft eine Vorrichtung für das Festlegen eines Werkzeugs an einem Hubwerk, insbesondere an einem Frontlader, mit einem beweglichen Riegel, der zwischen einer Verriegelungsstellung und einer Entriegelungsstellung bewegbar, durch einen Hydraulikmotor von der Verriegelungsstellung in die Entriegelungsstellung bringbar, selbsttätig in der Entriegelungsstellung arretierbar und durch eine fremdkraftbewirkte Bewegung eines Werkzeugs in die Verriegelungsstellung bringbar ist, wobei der Hydraulikmotor deaktivierbar ist, wenn sich der Riegel in der Entriegelungsstellung befindet.

In der DE 43 27 942 C ist eine Vorrichtung zum Festlegen eines Werkzeugs an einem Hubwerk beschrieben, die einen Riegel umfasst, welcher von Hand zwischen einer Verriegelungsstellung, in der er das Werkzeug am Hubwerk haltert, und einer Entriegelungsstellung bewegbar ist, in der er das Werkzeug freigibt. In der Entriegelungsstellung ist der Riegel arretierbar. Er wird nach dem Anbringen eines Werkzeugs durch hydraulisch bewerkstelligtes Verschwenken des Werkzeugs zur Hubschwinge hin selbsttätig in die Verriegelungsstellung verbracht. Wegen der manuellen Betätigung des Riegels muss sich der Bediener aber zum Werkzeug begeben, um den Riegel zu entriegeln. In dieser Druckschrift wird auch eine motorische Bewegung des Riegels in die Entriegelungsstellung vorgeschlagen. Es wird allerdings nicht offenbart, wie der Riegel bei einer derartigen Ausgestaltung in der Entriegelungsstellung gehalten und in die Verriegelungsstellung zurück gebracht werden soll.

Es sind auch andere Hubwerke bekannt (FR 2 776 316 A), bei denen ein Riegel zum Festlegen eines Werkzeugs durch einen Hydraulikmotor bewegt wird. Zum Entriegeln des Werkzeugs wird eine Taste an einem Handgriff im Arbeitsplatzbereich eines Bedieners betätigt, so dass der Hydraulikmotor beaufschlagt wird und den Riegel in die Entriegelungsstellung verbringt. Zum Verriegeln eines Werkzeugs ist allerdings eine weitere Tastenbetätigung erforderlich, um die Beaufschlagung des Hydraulikmotors zu beenden und den Riegel in die Verriegelungsstellung zu verbringen. Diese Lösung ist somit ebenfalls nicht bedienerfreundlich.

Die FR 2703113 A offenbart eine Verriegelungsvorrichtung für ein Werkzeug eines Laderfahrzeugs, die einen schwenkbaren Riegel umfasst, der an einer Befestigungsplatte einer Werkzeugaufnahme angeordnet ist. Ferner sind zwei mit Aufnahmeschlitzen versehene Bolzen an einem Werkzeug vorgesehen, die durch entsprechende Bohrungen einer Befestigungsplatte einer Werkzeugaufnahme geführt werden. Der Riegel wird über Vorspanneinrichtung in die Aufnahmeschlitze der Bolzen gezogen, um die Bolzen gegenüber der Befestigungsplatte zu verriegeln. Zum Entriegeln wird eine manuelle oder hydraulische Betätigung des Riegels vorgeschlagen, jedoch stellt sich die hier offenbarte Lösung als kompliziert und aufwändig dar.

Die der Erfindung zu Grunde liegende Aufgabe wird darin gesehen, eine ergonomisch günstige Vorrichtung zum Festlegen eines Werkzeugs an einem Hubwerk bereitzustellen, die nicht die oben geschilderten Nachteile aufweist.

Diese Aufgabe wird erfindungsgemäß durch die Lehre der Patentansprüche 1 gelöst, wobei in den weiteren Patentansprüchen Merkmale aufgeführt sind, die die Lösung in vorteilhafter Weise weiterentwickeln.

Erfindungsgemäß wird eine Vorrichtung der eingangs genannten Art derart ausgebildet, dass ein Druckspeicher vorgesehen ist und der Hydraulikmotor über ein von einem Arbeitsplatz eines Bedieners aus fernsteuerbares Ventil mit dem Druckspeicher verbindbar und von diesem trennbar ist, wobei der Druckspeicher in einem vom Hydraulikmotor getrennten Zustand mit einem Raum eines Hydraulikzylinders verbunden ist, der bei der Bewegung des Werkzeugs, die zum Verbringen des Riegels in die Verriegelungsstellung führt, mit Hydraulikfluid beaufschlagt wird. Der Riegel wird durch den Hydraulikmotor von der Verriegelungsstellung in die Entriegelungsstellung verbracht, um das Werkzeug vom Hubwerk abnehmen zu können. Der Riegel wird in der Entriegelungsstellung selbsttätig, d. h. ohne manuelles Zutun der Bedienungsperson, arretiert und der Hydraulikmotor wieder deaktiviert, so dass er einer Rückbewegung des Riegels in die Verriegelungsposition nicht entgegensteht. Nach dem Anbringen eines (anderen oder desselben) Werkzeugs wird der Riegel durch eine Bewegung des Werkzeugs gegenüber dem Hubwerk, insbesondere eine Schwenkbewegung, wieder in die Verriegelungsstellung verbracht. Auf diese Weise braucht der Bediener nur ein Entriegeln des Werkzeugs zu veranlassen, um es vom Hubwerk abnehmen zu können. Nach dem Anbringen des Werkzeugs wird es wieder festgelegt, ohne dass der Bediener durch einen Tastendruck o. dgl. ein Verriegeln veranlassen müsste. Der Hydraulikmotor ist vorzugsweise als Hydraulikzylinder ausgebildet. Der Hydraulikmotor wird zweckmäßigerweise, unabhängig von seiner Art, durch ein Ventil gesteuert, welches vom Arbeitsplatz eines Bedieners fernbetätigbar ist. Hubwerke, insbesondere Frontlader, werden in der Regel abnehmbar an Ackerschleppern angebracht und durch eine Reihe von Leitungen mit der Bordhydraulik des Ackerschleppers verbunden. Die Ventile zur Steuerung der Hydraulikzylinder des Hubwerks befinden sich in der Regel auf dem Ackerschlepper. Es ist somit nur eine begrenzte Anzahl an Leitungen verfügbar, die außerdem nur dann Druck führen, wenn einer der Hydraulikzylinder des Hubwerks betätigt wird. Es besteht aber unabhängig davon ein Bedarf an unter Druck stehendem Hydraulikfluid zur Aktivierung des Hydraulimmotors, um den Riegel zu beliebigen Zeitpunkten in die Entriegelungsstellung verbringen zu können. Erfindungsgemäß ist daher ein Druckspeicher zur Versorgung des Hydraulikmotors vorgesehen. Er wird durch eine oder mehrere der zum Ackerschlepper führenden Leitungen mit Druck versorgt und stellt jederzeit und unabhängig von der jeweiligen Position des Hubwerks einen zum Entriegeln hinreichenden Druck bereit. Der Druckspeicher wird vorzugsweise dann gefüllt, wenn er vom Hydraulikmotor getrennt ist. Dann wird er mit dem zum Bewegen des Werkzeugs dienenden Hydraulikzylinder verbunden. Wenn der Hydraulikzylinder beaufschlagt wird und das Werkzeug in die zum Verriegeln führende Richtung bewegt, so dass der Riegel aus der Entriegelungsstellung in die Verriegelungsstellung gelangt, wird auch der Druckspeicher gefüllt. Damit steht hinreichender Druck zur Verfügung, um das Werkzeug später wieder entriegeln zu können. Der Druckspeicher kann alternativ oder zusätzlich auch mit einem anderen Raum des genannten Hydraulikzylinders oder einem beliebigen anderen Hydraulikzylinder verbunden werden, um ihn zu füllen.

Der Hydraulikmotor ist in seine Ruheposition zu verbringen, bevor ein Werkzeug verrastet werden kann. Es bietet sich daher an, ihn - insbesondere durch ein Überströmventil - mit einer Kammer des Hydraulikzylinders zu koppeln, die dann drucklos ist, wenn der Hydraulikzylinder zum Bewegen des Werkzeugs letzteres in die zum Verriegeln führende Richtung bewegt. Ohne fernsteuerbare Ventile und selbsttätig wird somit nacheinander der Hydraulikmotor in seine Ruheposition gelangen und dann der Riegel verrastet.

Der Riegel wird zweckmäßigerweise durch eine Feder in seine Verriegelungsstellung vorgespannt. Dadurch erspart man sich einen doppelt wirkenden Hydraulikmotor zum Bewegen des Riegels und eine entsprechende Beschaltung.

Zur Arretierung des Riegels in der Entriegelungsstellung kann ein Längsschlitz dienen, wie er an sich aus der DE 43 27 942 C bekannt ist. Der Längsschlitz hat einen Abschnitt kleiner Schlitzbreite und einen Abschnitt mit größerer Schlitzbreite. Der Riegel ist gegenüber dem Längsschlitz beweglich. Ein Anschlag des Riegels hat eine Abmessung, die größer als die kleinere, aber kleiner als die größere Schlitzbreite ist. Wird der Riegel quer zur Erstreckung des Längsschlitzes aus der Verriegelungsstellung in die Entriegelungsstellung gezogen, gelangt der Anschlag aus dem Längsschlitz heraus und wird durch die Wirkung einer zweiten Feder entlang des Längsschlitzes bewegt, insbesondere gedreht. Nach dem Deaktivieren des Hydraulikmotors gelangt der Anschlag in Anlage an den Abschnitt des Längsschlitzes mit kleineren Abmessungen; er ist dort in der Entriegelungsstellung arretiert. Er wird nach dem Wiederanbringen eines Werkzeugs durch die Bewegung des Hubwerks bedingt, wobei der Riegel an ein anderes Element stößt, wieder zum Abschnitt des Längsschlitzes mit größerer Schlitzbreite verbracht. Dort wird der Riegel durch die Feder in die Raststellung bewegt.

Eine zweite Feder, die den Riegel in der Entriegelungsstellung in eine Position verbringt, in der er arretiert ist, kann auch an beliebigen anderen Einrichtungen zum Arretieren des Riegels Verwendung finden. Anstelle einer Feder könnte aber auch ein Gewicht oder ein weiterer Hydraulikmotor dazu dienen, den Riegel in der Entriegelungsstellung zu arretieren.

Es gibt Höhenbereiche, in denen eine Aktivierung des Hydraulikmotors zur Entriegelung des Riegels nicht sinnvoll ist. In derartigen Höhenbereichen wird eine entsprechende Eingabe des Bedieners zweckmäßigerweise ignoriert, um die Unfallgefahr zu vermindern. In einer bevorzugten Ausführungsform ist ein Positionsbereich des Hubwerks, in der die Eingabe zum Lösen des Werkzeugs ignoriert wird, durch den Bediener definierbar. Dazu können Zahleneingaben gemacht werden oder das Hubwerk wird in eine entsprechende Position gebracht, die dann auf eine entsprechende Eingabe hin abgespeichert wird. Es können auch mehrere derartige Bereiche definierbar sein. Ein Sensor erfasst die Position des Hubwerks und eine mit dem Sensor, dem Tastschalter und dem Ventil zur Steuerung des Motors verbundene Steuerschaltung aktiviert das Ventil nur in erlaubten Positionsbereichen des Hubwerks.

Das Festlegen des Werkzeugs am Hubwerk kann in an sich bekannter Weise dadurch erfolgen, dass es durch einen Hydraulikzylinder gegenüber dem Hubwerk verschwenkt wird. Dabei wirkt der Riegel mit dem Hubwerk zusammen und gelangt selbsttätig in die Verriegelungsstellung.

In den Zeichnungen ist ein nachfolgend näher beschriebenes Ausführungsbeispiel der Erfindung dargestellt. Es zeigt:
- Fig. 1: ein Hubwerk mit einem Werkzeug in Seitenansicht,
- Fig. 2: eine Vorrichtung zum Festlegen des Werkzeugs an dem Hubwerk in Vorderansicht,
- Fig. 3: eine perspektivische Seitenansicht des linken Teils der Vorrichtung aus Figur 2, und
- Fig. 4: ein hydraulisches Schaltschema der Vorrichtung.

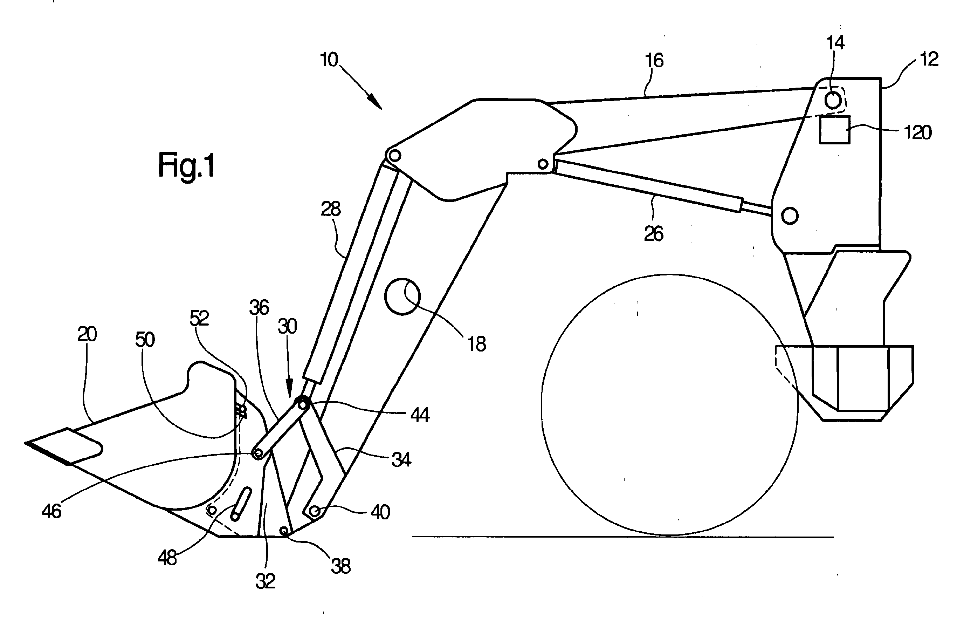

Von einem in Figur 1 gezeigten Hubwerk 10, das frontseitig an einen nur angedeuteten Ackerschlepper angeschlossen ist, ist ein Mast 12 abgebildet, der in einem Lager 14 eine Hubschwinge 16 aufnimmt, die aufgrund ihrer doppelarmigen Ausführung mittels eines Querträgers 18 versteift wird. Ein Werkzeug 20, z. B. eine Erdschaufel, eine Dunggabel, eine Ballengabel oder eine Palettengabel ist an dem frontseitigen Ende der Hubschwinge 16 mittels einer nachfolgend beschriebenen Stellvorrichtung 30 und einem Werkzeughalter 32 beweglich und auswechselbar angeschlossen. Um das Werkzeug 20 anzuheben, wird die Hubschwinge 16 über Hydraulikmotoren 26 um das Lager 14 geschwenkt. Zur Verstellung der Neigung des Werkzeugs 20 greift an der Stellvorrichtung 30 einen Endes und an der Hubschwinge 16 anderen Endes ein weiterer Hydraulikmotor 28 an. Die Stellvorrichtung 30 wirkt auf den Werkzeughalter 32, an den das Werkzeug 20 direkt angeschlossen wird, und setzt sich im Wesentlichen aus einem ersten und einem zweiten Schwenkarm 34, 36 zusammen, die gelenkig miteinander verbunden sind, wobei in der Gelenkstelle 44 der Hydraulikmotor 28 angreift. Der Werkzeughalter 32 ist in einem Lager 38 und der erste Schwenkarm 34 in einem Lager 40 an der Hubschwinge 16 schwenkbar gelagert. Der zweite Schwenkarm 36 ist in einem Lager 46 schwenkbar mit dem Werkzeughalter 32 verbunden. Mit 48 ist ein Riegel bezeichnet, der weiter unten näher erläutert wird. Im oberen Abschnitt des Werkzeughalters 32 sind ein Haken 50 und ein Bolzen 52 vorgesehen, die das Werkzeug 20 in Eingriff mit dem Hubwerk 10 bringen.

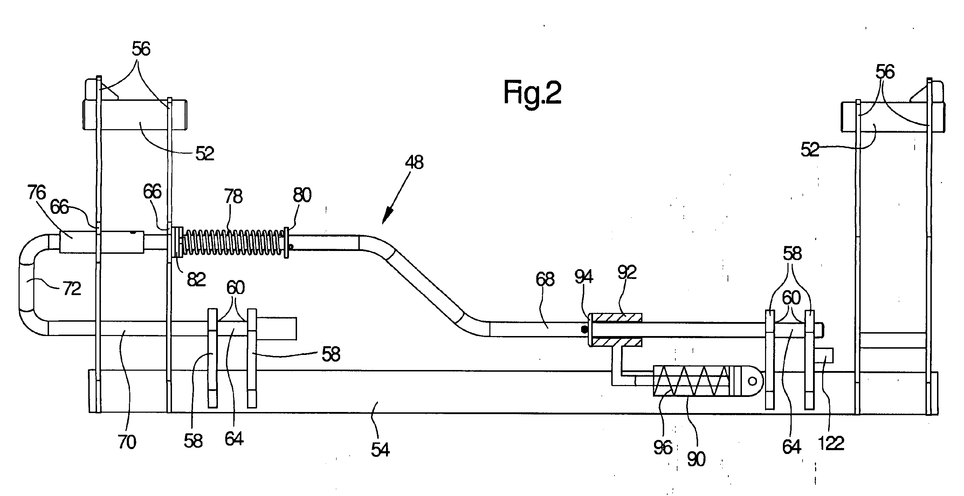

Gemäß Figur 2 setzt sich der Werkzeughalter 32 an seiner Unterseite aus einer sich über die gesamte Breite erstreckenden Querspange 54 und jeweils doppelt angeordneten Wänden 56 zusammen, die von den Endabschnitten der Querspange 54 durchdrungen und auf diese aufgeschweißt sind.

Radial und parallel zueinander stehen von der dem Werkzeug 20 zugelegenen Seite der Querspange 54 an jeder Seite zwei Laschen 58 mit miteinander fluchtenden Öffnungen 60 ab. Die Öffnungen 60 dienen der Aufnahme von an dem Riegel 48 angebrachten, bolzenförmigen Sperrteilen 64, mit deren Hilfe das Werkzeug 20 an den Werkzeughalter 32 und mithin an das Hubwerk 10 angeschlossen wird. An dem Werkzeug 20 sind an der dem Werkzeughalter 32 zugewandten Seite ebenfalls - aber nicht gezeigt - Laschen mit derartigen Öffnungen angebracht, die miteinander in Fluchtung bringbar sind und durch die die Sperrteile 64 des Riegels 48 geschoben werden können.

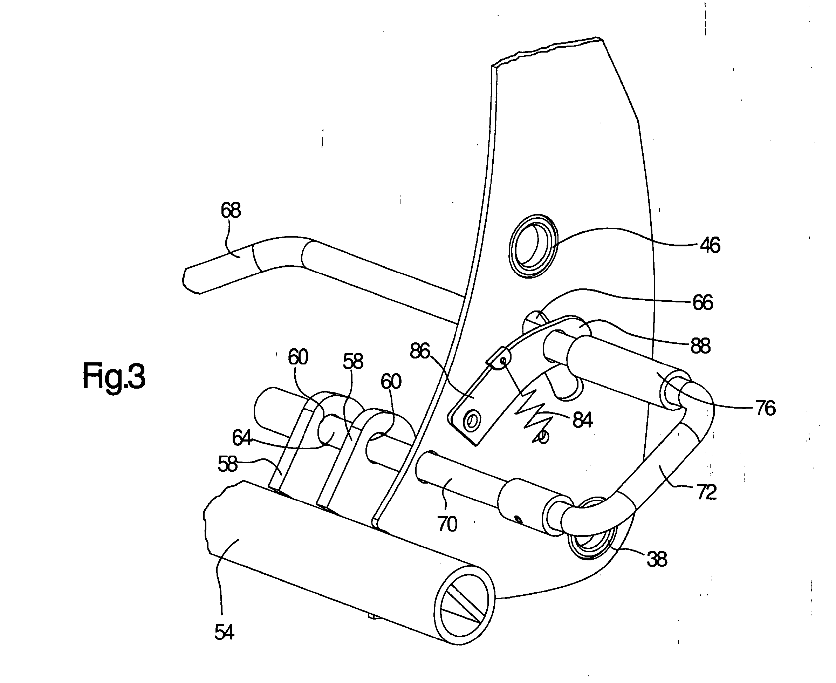

Die doppelten Wände 56 jeder Seite tragen in ihrem oberen Eckbereich die Bolzen 52 zur Aufnahme der Haken 50, darunter und nach hinten versetzt das Lager 46 und in dem rechten unteren Eckbereich das Lager 38 zum Anschluss an die Hubschwinge 16 (s. Figur 3). Darüber hinaus sind in die in Figur 2 links gelegenen Wände 56 jeweils zwei miteinander fluchtende Längsschlitze 66 eingearbeitet, deren Mittenlinie auf einem Kreisbogen um das Zentrum der Öffnungen 60 liegt. Der Längsschlitz 66 der in Figur 2 links innen gelegenen Wand 56 weist eine über seine Länge etwa konstante Schlitzweite auf. Der Längsschlitz 66 der in Figur 2 links außen gelegenen Wand 56 weist in einem unteren Abschnitt eine schmale Schlitzweite und in einem oberen Abschnitt eine breite Schlitzweite auf.

Der aus Rundstahl hergestellte Riegel 48 besitzt im Wesentlichen die Form eines "J" mit einem ersten, langen Schenkel 68, einem zweiten, kurzen Schenkel 70 und einem Griff 72, der von dem diese verbindenden Steg gebildet wird.

Der erste lange Schenkel 68 ist zwischen dem Griff 72 und einem als rechtes Sperrteil 64 dienenden Endteil zweifach gegensinnig um etwa 30° gekröpft und mit dem Sperrteil 64 stets in der Öffnung 60 der inneren Lasche 58 auf der rechten Seite geführt. Der dem Sperrteil 64 gegenüberliegende und zu diesem radial versetzte Abschnitt des langen Schenkels 68 erstreckt sich durch beide Längsschlitze 66 und trägt einen als Hülse gebildeten Anschlag 76, der sich in der in Figur 2 gezeigten Verriegelungsstellung des Riegels 48 je zur Hälfte links und rechts der außenliegenden Wand 56 erstreckt. Die Länge des sich in dem Raum zwischen beiden Wänden 56 erstreckenden Abschnitts des Anschlags 76 entspricht im Wesentlichen dem Stellweg des Riegels 48 zum Sperren bzw. Entsperren des Werkzeugs 20. Der Außendurchmesser dieses Anschlags 76 ist kleiner als die große Schlitzweite, aber größer als die kleine Schlitzweite des äußeren Längsschlitzes 66. Innen, d. h. mit Blick auf die Figur 2 rechts der innenliegenden, linken Wand 56 ist der lange Schenkel 68 konzentrisch von einer Feder 78 umgeben, die einerseits an einer am langen Schenkel 68 befestigten Scheibe 80 und anderen Endes an einer an der Wand 56 gleitend anliegenden Scheibe 82 unter Vorspannung anliegt, wobei der Durchmesser der Scheibe 82 größer ist als der Längsschlitz 66 in seinem weitesten Abschnitt breit ist.

Der Griff 72 ist zweifach gegensinnig um jeweils 90° abgewinkelt und erstreckt sich von der außen liegenden Wand 56 nach außen in einen für eine Bedienungsperson leicht zugänglichen Bereich fort.

Der zweite, kurze Schenkel 70 verläuft zu dem langen Schenkel 68 in dessen Bereich bis zur Kröpfung parallel und erstreckt sich durch die Öffnungen 60 der linken Seite und entsprechend fluchtende, gegebenenfalls von Führungen umgebene Bohrungen 74 in den links gelegenen Wänden 56. Der zweite kurze Schenkel 70 weist ebenfalls einen als Sperrteil 64 dienenden Endabschnitt auf, der stets in der Öffnung 60 der links gelegenen Lasche 58 geführt ist.

Die Feder 78 ist als Schraubendruckfeder ausgebildet und so eingesetzt und gespannt, dass sie den Riegel 48 stets mit Blick auf Figur 2 nach rechts drängt, so dass seine Sperrteile 64 alle Laschen 58 durchsetzen.

Außerdem ist ein Hydraulikmotor 90 in Form eines Hydraulikzylinders vorgesehen, dessen sich in Längsrichtung der Querspange 54 erstreckendes Gehäuse an der Querspange 54 befestigt ist. Der Kolben des Hydraulikmotors 90 ist mit einer Hülse 92 verbunden, die den langen Schenkel 68 des Riegels 48 in Nachbarschaft der in Figur 2 rechts eingezeichneten Lasche 58 umschließt. Die Hülse 92 ist nahe einer mit dem langen Schenkel 68 fest verbundenen Scheibe 94 angeordnet. Der Kolben des Hydraulikmotors 90 ist eingerichtet, die Hülse 92 aus der in Figur 2 eingezeichneten Ruhestellung nach links zu verschieben.
Auf diese Weise besteht die Möglichkeit, den Riegel 48 ferngesteuert in eine Entriegelungsstellung zu verbringen. Zwischen der Kolbenstange und dem Kolben des Hydraulikmotors 90 ist eine weitere Feder 96 angeordnet, die den Kolben in Richtung auf den Zylinderraum vorspannt, d. h. die Hülse 92 in Figur 2 nach rechts zu verschieben bestrebt ist.

Mit Blick auf die Figur 2 wird deutlich, dass der Riegel 48 von Hand an dem Griff 72 erfasst und entgegen der Kraft der Feder 78 nach links gezogen werden kann, so dass beide Sperrteile 64 aus der jeweils rechts eingezeichneten, zweiten Lasche 58 herausgezogen werden und den Freiraum zwischen beiden Laschen 58 zur Aufnahme oder Abgabe der werkzeugseitigen Lasche freigeben. Zur Entriegelung/Freigabe des Werkzeugs 20 ist es folglich erforderlich, den Riegel 48 nach außen, d. h. mit Blick auf die Figur 2 nach links zu ziehen, was von Hand erfolgen kann. Dabei gleitet die Hülse 92 auf dem langen Schenkel 68 des Riegels 48. Der Kolben des Hydraulikmotors 90 bleibt dann stationär.

Anhand der Figur 3, in der die äußere linke Wand 56 aus Gründen der Übersichtlichkeit nicht mit eingezeichnet ist, ist erkennbar, dass eine zweite Feder 84 mit dem Riegel 48 zusammenwirkt. Die Feder 84 ist einen Endes an der inneren linken Wand 56 und anderen Endes an einer Schwinge 86 befestigt, welche an der inneren Wand 56 um eine parallel zur Querspange 54 verlaufende Drehachse schwenkbar angelenkt ist. Der lange Schenkel 68 des Riegels 48 durchdringt eine Öffnung 88 in der Schwinge 86. Auf diese Weise zieht die Feder 84, betrachtet man die Figur 3, den langen Schenkel 68 nach unten, sobald der Anschlag 76 aus dem Längsschlitz 66 herausgezogen ist, so dass der lange Schenkel 68 dort in den Bereich des Längsschlitzes 66 mit verringerter Breite gelangt. Der Riegel 48 ist in seiner Entriegelungsstellung arretiert und kann bei manueller Betätigung losgelassen werden.

Soll der Werkzeughalter zur Aufnahme eines Werkzeugs 20 vorbereitet werden, kann der Riegel 48 ebenfalls, wie zuvor beschrieben, manuell nach außen in die Entriegelungsstellung gezogen werden, wo er durch die zweite Feder 84 um die durch die Öffnungen 60 verlaufende Achse mit Blick auf Figur 3 im Uhrzeigersinn gezogen wird, so dass der Anschlag 76 an der Außenseite der linken äußeren Wand 56 in den Bereich der geringen Schlitzweite des Längsschlitzes 66 bewegt wird.

Dabei ist die Feder 78 vorgespannt und der Riegel 48 wird in der ausgerückten Stellung gehalten. Anschließend kann mittels der oder des Bolzens 52 und der oder des Hakens 50 das Werkzeug 20 aufgenommen und angehoben werden, so dass die werkzeugseitige Lasche zwischen die Laschen 58 an der Querspange 54 gelangt und alle Öffnungen 60 fluchten. Schließlich wird mittels des Hydraulikmotors 28 das Werkzeug 20 zu der Hubschwinge 16 gekippt, so dass der Anschlag 76 an der Hubschwinge 16 zur Anlage kommt und in den Bereich der großen Schlitzweite geschwenkt wird. Dort angelangt, wird der Riegel 48 mit den beiden Sperrteilen 64 unter der Wirkung der Feder 78 mit Blick auf die Figur 2 nach rechts geschoben, so dass die beiden Sperrteile 64 alle Laschen durchdringen und das Werkzeug 20 festlegen.

Andererseits kann zur Entriegelung/Freigabe des Werkzeugs 20 vom Arbeitsplatz eines Bedieners auf dem Ackerschlepper aus der Hydraulikmotor 90 aktiviert werden, so dass sein Kolben die Hülse 92 in Anlage an die Scheibe 94 bringt und letztere 94 mit dem ganzen Riegel 48 nach links verschiebt. Die Sperrteile 64 geben die Laschen des Werkzeugs frei. Da der Hub des Hydraulikmotors 90 hinreicht, den Anschlag 76 aus dem Längsschlitz 66 der äußeren Wand 56 herauszuziehen, wird dann der Riegel 48 durch die zweite Feder 84 gedreht und in seiner Entriegelungsstellung arretiert. Der Hydraulikmotor 90 bleibt zunächst beaufschlagt. Anschließend kann ein Werkzeug in der oben beschriebenen Weise am Werkzeughalter 32 fixiert und durch Betätigung des weiteren Hydraulikzylinders 28 arretiert werden. Zuvor gelangt der Hydraulikmotor 90 bei Betätigung des weiteren Hydraulikzylinders 28 durch die Federn 78 und 96 in seine Ruheposition. Es wäre auch denkbar, die Feder 96 entfallen zu lassen und den Hydraulikmotor 90 durch die Feder 78 in seine Ruhestellung zu verbringen.

Bei einer anderen Ausführungsform kann der Hub des Hydraulikmotors 90 so gewählt werden, dass er nicht hinreicht, den Anschlag 76 aus dem Längsschlitz 66 der äußeren Wand herauszuziehen. Der Hydraulikmotor 90 verbleibt in dieser Position oder wird wieder in die Ruheposition bewegt, um den Kolben des Hydraulikmotors nur über kurze Zeit den Umgebungseinflüssen auszusetzen. Der Riegel 48 wird in dieser Ausführungsform somit beim Lösen des Werkzeugs nicht in der Entriegelungsstellung arretiert. Soll aber ein neues Werkzeug angebracht werden, kann der Hydraulikmotor 90 später, beispielsweise vor bzw. während der Kippbewegung des Werkzeugs 20 zur Verriegelung, den Anschlag 76 so weit aus dem Längsschlitz 66 der äußeren Wand 56 herausziehen, dass der Riegel 46 in der Entriegelungsposition verrastet ist. Es wäre auch denkbar, den Hydraulikmotor 90 nur soweit ausfahren zu lassen, dass der Riegel 48 zwar das Anbringen des Werkzeugs erlaubt, aber nicht arretiert wird. Danach wird das Werkzeug durch Entlasten des Hydraulikmotors 90 wieder arretiert.

Die aus der Hülse 92 und der Scheibe 94 aufgebaute Kupplungseinrichtung zwischen dem Motor 90 und dem Riegel 48 ermöglicht, den Riegel durch den Hydraulikmotor 90 und unabhängig davon manuell zu betätigen. Die Feder 78 erlaubt die Verwendung der Kupplungseinrichtung und eines einfachwirkenden Hydraulikzylinders als Hydraulikmotor 90.

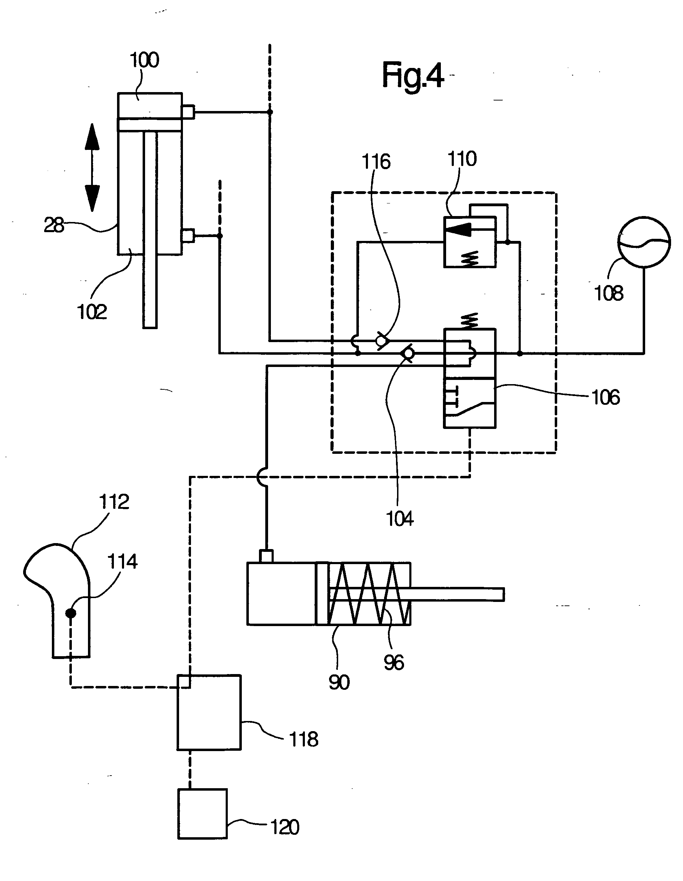

In der Figur 4 ist ein Hydraulikdiagramm wiedergegeben, anhand dessen im Folgenden die Ansteuerung des Hydraulikmotors 90 erläutert wird. Der zur Verstellung der Neigung des Werkzeugs 20 dienende weitere Hydraulikzylinder 28 ist ein doppelt wirkender Zylinder, dessen Kolbenraum 100 und Kolbenstangenraum 102 durch - in Figur 4 nicht eingezeichnete - geeignete Leitungen mit der Arbeitshydraulik des Ackerschleppers verbindbar sind. Die Ventile zur Ansteuerung des Hydraulikzylinders 28, wie auch ein Ventil zur Ansteuerung des einfach wirkenden Hydraulikzylinders 26 befinden sich auf dem Ackerschlepper. Es führen somit drei lösbare Hydraulikleitungen zum Hubwerk 10. Die in Figur 4 dargestellten Elemente sind alle am Hubwerk 10 angeordnet. Außerdem ist eine lösbare elektrische Verbindung zur Ansteuerung eines Ventils 106 zwischen dem Ackerschlepper und dem Hubwerk 10 vorhanden.

Wenn der Kolbenstangenraum 102 beaufschlagt wird, dreht sich das Werkzeug in der Figur 1 im Uhrzeigersinn (entgegen der Fahrtrichtung des Ackerschleppers nach hinten). Wird der Kolbenraum 100 beaufschlagt, dreht sich das Werkzeug 20 analog zum Entladen nach vorn. Der jeweils nicht beaufschlagte Raum 100, 102 des weiteren Hydraulikmotors 28 ist durch die am Ackerschlepper vorgesehenen Ventile mit einem Tank zur Aufnahme des überschüssigen Hydraulikfluids verbunden.

Der Kolbenstangenraum 102 ist durch ein Rückschlagventil 104 und ein elektromagnetisch gesteuertes Schaltventil 106 mit einem pneumatischen Druckspeicher 108 verbunden. Befindet sich das Schaltventil 106 in der in Figur 4 eingezeichneten Ruhestellung, strömt über das Rückschlagventil 104 Hydraulikfluid in den Druckspeicher 108, sobald der Druck im Kolbenstangenraum 102 um einen bestimmten Differenzdruck höher ist als der im Druckspeicher 108 herrschende Druck. Beim Verschwenken des Werkzeugs 20 nach hinten - was dazu führt, dass der Riegel 48 in die Verriegelungsposition gelangt - wird somit der Druckspeicher 108 gefüllt. Es wäre auch denkbar, den Druckspeicher 108 durch ein weiteres Rückschlagventil mit dem Kolbenraum 100 des weiteren Hydraulikzylinders 28 zu verbinden.

Der Kolbenraum des Hydraulikmotors 90 ist in der Ruhestellung des Schaltventils 106 über ein Rückschlagventil 116 mit dem Kolbenraum 100 des weiteren Hydraulikzylinders 28 und somit mit dem Tank verbunden. Der Hydraulikmotor 90 wird somit nicht beaufschlagt, wenn der Kolbenraum 100 nicht unter Druck steht, was dann der Fall ist, wenn das Werkzeug 20 zum Verriegeln zur Hubschwinge 16 hin gekippt wird, so dass er sich dann in seine in Figur 2 eingezeichnete Ruhestellung bewegt. Steigt anschließend der Druck im Kolbenraum 100 wieder an, verhindert das Rückschlagventil 116 einen Druckanstieg im Kolbenraum des Hydraulikmotors 90.

Durch einen Tastschalter 112, der an einem zur Steuerung der Hydraulikzylinder 26, 28 manuell bewegbaren Handgriff 114 angebracht ist, welcher sich am Arbeitsplatz des Bedieners auf dem Ackerschlepper befindet, kann über eine Steuerschaltung 118 das Schaltventil 106 elektromagnetisch in seine Betriebsstellung verbracht werden, in der der Druckspeicher 108 mit dem Kolbenraum des Hydraulikmotors 90 verbunden ist. Dadurch wird der Hydraulikmotor 90 ausgefahren und der Riegel 48 in seine Entriegelungsstellung bewegt, in der er durch die zweite Feder 84 mittels des Anschlags 76 arretiert wird. Dann verbringt die Steuerschaltung 118 das Schaltventil 106 selbsttätig wieder in die Ruhestellung, so dass der Hydraulikmotor 90 über das Schaltventil 106 und das Überströmventil 116 mit dem Kolbenraum 100 verbunden ist. Der Hydraulikmotor 90 bleibt beaufschlagt, bis der Druck im Kolbenraum 100 abfällt. Der Druckspeicher 108 ist weiterhin über ein Druckbegrenzungsventil 110 mit dem Kolbenstangenraum 102 verbunden, dessen Zweck darin besteht, überschüssiges Hydraulikfluid aus dem Druckspeicher 108 in den Tank abzulassen, wenn sich das Schaltventil 106 in seiner Betriebsstellung befindet und somit der Druckspeicher 108 nur mit dem Hydraulikmotor 90 verbunden ist. Es könnte auch möglich sein, auf das Druckbegrenzungsventil 110 zu verzichten.

Die Steuerschaltung 118 ist weiterhin mit einem Sensor 120 verbunden, der am Mast 12 angebracht ist und den Schwenkwinkel der Hubschwinge 16 um das Lager 14 erfasst (s. Figur 1). Der Sensor 120 kann beispielsweise ein Potentiometer oder ein Inkrementalwinkelgeber sein. In der Steuerschaltung 118 sind Winkelbereiche abgespeichert, in denen eine Aktivierung des Tastschalters 112 ignoriert wird. Dadurch kann verhindert werden, dass der Hydraulikmotor 90 bei ungeeigneten Positionen der Hubschwinge 16 aktiviert wird, beispielsweise wenn sie sehr weit angehoben ist. Die Winkelbereiche, in denen der Tastschalter 112 ignoriert wird, können fest einprogrammiert oder durch den Bediener eingegeben werden, insbesondere in Form von Zahlenwerten oder durch Eingaben in Form von Tastenbetätigungen o. ä., wenn sich die Hubschwinge 16 in einer Position befindet, in der ein entsprechender Winkelbereich anfängt oder endet.

Ein weiterer Sensor 122 (s. Figur 2) wirkt mit dem Sperrteil 64 zusammen und erfasst, ob es sich in seiner Verriegelungsstellung befindet. Falls der Hydraulikmotor 90 nicht beaufschlagt wird, jedoch der Kolben 100 des weiteren Hydraulikzylinders 28 beaufschlagt wurde und das Sperrteil 64 sich somit in seiner Verriegelungsstellung befinden sollte, der Sensor 122 es aber nicht erfasst, wird dem Bediener ein entsprechender akustischer oder optischer Warnhinweis gegeben. Der Sensor 122 kann einen mechanischen oder magnetischen Schalter oder eine Lichtschranke zur Erfassung des Sperrteils 64 aufweisen. Den Sensoren 120, 122 und der Verwendung ihrer Signale kommt selbstständige erfinderische Bedeutung zu.

Die Verschaltung des Hydraulikmotors 90 ermöglicht es somit, den Hydraulikmotor 90 zu aktivieren, um den Riegel 48 in seine Entriegelungsstellung zu verbringen und dort zu arretieren. Anschließend kann das Werkzeug 20 auf dem Boden oder einer beliebigen anderen Ablagefläche abgelegt und danach ein anderes oder dasselbe Werkzeug 20 aufgenommen und angehoben werden.

Anschließend wird mittels des Hydraulikmotors 28 das Werkzeug 20 zu der Hubschwinge 16 gekippt, so dass der Hydraulikmotor 90 nicht mehr beaufschlagt wird und durch die Feder 96 in seine in Figur 2 gezeigte Ruheposition verbracht wird. Kurz danach kommt der Anschlag 76 an der Hubschwinge 16 zur Anlage und wird in den Bereich der großen Schlitzweite geschwenkt. Dort angelangt, verbringt die Feder 78 den Riegel 48 in die Verriegelungsstellung. Gleichzeitig wird der Druckspeicher 108 wieder gefüllt. Zum Festlegen des Werkzeugs 20 ist somit keine Aktivierung einer Hydraulikfunktion mehr erforderlich, eine Betätigung einer Taste erübrigt sich.

## Patentansprüche

1. Vorrichtung für das Festlegen eines Werkzeugs (20) an einem Hubwerk (10), insbesondere an einem Frontlader, mit einem beweglichen Riegel (48), der zwischen einer Verriegelungsstellung und einer Entriegelungsstellung bewegbar, durch einen Hydraulikmotor (90) von der Verriegelungsstellung in die Entriegelungsstellung bringbar, selbsttätig in der Entriegelungsstellung arretierbar und durch eine fremdkraftbewirkte Bewegung eines Werkzeugs (20) in die Verriegelungsstellung bringbar ist, wobei der Hydraulikmotor (90) deaktivierbar ist, wenn sich der Riegel (48) in der Entriegelungsstellung befindet, **dadurch gekennzeichnet, dass** die Vorrichtung einen Druckspeicher (108) umfasst und der Hydraulikmotor (90) über ein von einem Arbeitsplatz eines Bedieners aus fernsteuerbares Ventil (106) mit dem Druckspeicher (108) verbindbar und von diesem trennbar ist, wobei der Druckspeicher (108) in einem vom Hydraulikmotor (90) getrennten Zustand mit einem Raum (102) eines Hydraulikzylinders (28) verbunden ist, der bei der Bewegung des Werkzeugs (20), die zum Verbringen des Riegels (48) in die Verriegelungsstellung führt, mit Hydraulikfluid beaufschlagt wird.

2. Vorrichtung nach Anspruch 1, **dadurch gekennzeichnet, dass** der Hydraulikmotor (90) mit einer Kammer (100) des Hydraulikzylinders (28) verbindbar ist, die dann drucklos ist, wenn der Hydraulikzylinder (28) das Werkzeug (20) in eine zum Verriegeln führende Richtung bewegt.

3. Vorrichtung nach einem der Ansprüche 1 oder 2, **gekennzeichnet durch** eine Feder (78), die den Riegel (48) in die Verriegelungsstellung vorspannt.

4. Vorrichtung nach einem der Ansprüche 1 bis 3, **dadurch gekennzeichnet, dass** der Riegel (48) entlang eines Längsschlitzes (66) beweglich ist, der einen Abschnitt mit einer größeren Schlitzbreite und einen Abschnitt mit kleinerer Schlitzbreite aufweist, dass der Riegel (48) einen Anschlag (76) mit Abmessungen enthält, die größer als die des Abschnitts des Längsschlitzes (66) mit kleinerer Schlitzbreite und kleiner als die des Abschnitts mit größerer Schlitzbreite sind, und dass der Anschlag (76) bei in die Entriegelungsstellung verbrachtem Riegel (48) in Anlage an den Abschnitt des Längsschlitzes mit kleinerer Schlitzbreite bringbar ist, um den Riegel (48) in der Entriegelungsstellung zu arretieren.

5. Vorrichtung nach einem der vorhergehenden Ansprüche, **dadurch gekennzeichnet, dass** der Riegel (48) in der Entriegelungsstellung durch eine zweite Feder (84) in seine Arretierposition verbracht wird.

6. Vorrichtung nach einem der vorhergehenden Ansprüche, **dadurch gekennzeichnet, dass** eine benutzergesteuerte Aktivierung des Hydraulikmotors (90) ignoriert wird, wenn sich das Hubwerk innerhalb eines durch den Benutzer definierbaren Positionsbereichs befindet.

7. Vorrichtung nach einem der vorhergehenden Ansprüche, **dadurch gekennzeichnet, dass** der Riegel (48) derart ausgebildet ist, dass er durch die fremdkraftbewirkte Bewegung des Werkzeugs (20) an einem Teil des Hubwerks (10) in Anlage kommt und **dadurch** in die Verriegelungsstellung bringbar ist.

## Claims

1. Device for fixing a tool (20) to a lifting gear (10), in particular to a front loader, with a movable latch (48) which can be moved between a latching position and a release position, can be brought by a hydraulic motor (90) from the latching position into the release position, can be automatically locked in the release position and can be brought into the latching position by an external-force-induced movement of a tool (20), wherein the hydraulic motor (90) can be deactivated when the latch (48) is in the release position, **characterized in that** the device comprises a pressure accumulator (108), and the hydraulic motor (90) can be connected to and separated from the pressure accumulator (108) via a valve (106) which can be controlled remotely from an operator's workplace, the pressure accumulator (108), in a state in which it is separated from the hydraulic motor (90), being connected to a space (102) in a hydraulic cylinder (28) which, upon the movement of the tool (20) which leads to the latch (48) being brought into the latching position, is charged with hydraulic fluid.

2. Device according to Claim 1, **characterized in that** the hydraulic motor (90) can be connected to a chamber (100) in the hydraulic cylinder (28), which chamber is unpressurized if the hydraulic cylinder (28) moves the tool (20) in a direction leading to latching occurring.

3. Device according to either of Claims 1 and 2, **characterized by** a spring (78) which prestresses the latch (48) into the latching position.

4. Device according to one of Claims 1 to 3,
**characterized in that** the latch (48) is movable along a longitudinal slot (66) which has a portion having a greater slot width and a portion having a smaller slot width, **in that** the latch (48) contains a stop (76) having dimensions which are larger than those of the portion of the longitudinal slot (66) having a smaller slot width and smaller than those of the portion having a greater slot width, and **in that**, when the latch (48) has been brought into the release position, the stop (76) can be brought into contact with that portion of the longitudinal slot that has a smaller slot width, in order to lock the latch (48) in the release position.

5. Device according to one of the preceding claims, **characterized in that** the latch (48) is brought in the release position into the locking position thereof by a second spring (84).

6. Device according to one of the preceding claims, **characterized in that** a user-controlled activation of the hydraulic motor (90) is ignored when the lifting gear is located within a position range which can be defined by the user.

7. Device according to one of the preceding claims, **characterized in that** the latch (48) is designed in such a manner that it comes into contact with part of the lifting gear (10) by means of the external-force-induced movement of the tool (20) and, as a result, can be brought into the latching position.

## Revendications

1. Dispositif pour verrouiller un outil (20) sur un système élévateur (10), en particulier un chargeur frontal, comprenant un verrou mobile (48), qui peut être déplacé entre une position de verrouillage et une position de déverrouillage, qui peut être amené par un moteur hydraulique (90) de la position de verrouillage dans la position de déverrouillage, qui peut être bloqué automatiquement dans la position de déverrouillage et qui peut être amené par un mouvement d'un outil (20), commandé par une force extérieure, dans la position de verrouillage, le moteur hydraulique (90) pouvant être désactivé lorsque le verrou (48) se trouve dans la position de déverrouillage, **caractérisé en ce que** le dispositif comprend un accumulateur de pression (108) et le moteur hydraulique (90) peut être connecté à l'accumulateur de pression (108) et en être désaccouplé par le biais d'une soupape (106) pouvant être commandée à distance par un opérateur depuis son poste de travail, l'accumulateur de pression (108) étant connecté, dans un état déconnecté du moteur hydraulique (90), à un espace (102) d'un cylindre hydraulique (28), qui, lors du mouvement de l'outil (20), qui conduit à amener le verrou (48) dans la position de verrouillage, est sollicité par du fluide hydraulique.

2. Dispositif selon la revendication 1, **caractérisé en ce que** le moteur hydraulique (90) peut être connecté à une chambre (100) du cylindre hydraulique (28), qui est alors sans pression lorsque le cylindre hydraulique (28) déplace l'outil (20) dans une direction entraînant le verrouillage.

3. Dispositif selon l'une quelconque des revendications 1 ou 2, **caractérisé par** un ressort (78) qui précontraint le verrou (48) dans la position de verrouillage.

4. Dispositif selon l'une quelconque des revendications 1 à 3, **caractérisé en ce que** le verrou (48) est déplaçable le long d'une fente longitudinale (66), qui présente une portion de plus grande largeur de fente et une portion de plus petite largeur de fente, **en ce que** le verrou (48) contient une butée (76) avec des dimensions qui sont supérieures à celles de la portion de la fente longitudinale (66) de plus petite largeur de fente et inférieures à celles de la portion de plus grande largeur de fente, et **en ce que** la butée (76), lorsque le verrou (48) est amené dans la position de déverrouillage, peut être amenée en appui contre la portion de la fente longitudinale de plus petite largeur de fente, afin de bloquer le verrou (48) dans la position de déverrouillage.

5. Dispositif selon l'une quelconque des revendications précédentes, **caractérisé en ce que** le verrou (48) dans la position de déverrouillage est amené par un deuxième ressort (84) dans sa position de blocage.

6. Dispositif selon l'une quelconque des revendications précédentes, **caractérisé en ce qu'**une activation commandée par l'opérateur, du moteur hydraulique (90) est ignorée si le système élévateur se trouve à l'intérieur d'une plage de positions pouvant être définie par l'opérateur.

7. Dispositif selon l'une quelconque des revendications précédentes, **caractérisé en ce que** le verrou (48) est réalisé de telle sorte qu'il vienne en appui sous l'effet du mouvement de l'outil (20) provoqué par la force extérieure, contre une partie du système élévateur (10) et de ce fait qu'il puisse être amené dans la position de verrouillage.
